# EUROPÄISCHE PATENTSCHRIFT

(11) **EP 2 511 561 B1**
(45) Veröffentlichungstag und Bekanntmachung des Hinweises auf die Patenterteilung: **14.11.2018**
(21) Anmeldenummer: 11160649.7
(22) Anmeldetag: 31.03.2011
(51) Int. Cl.: F16F 7/10

(54) **Aktiver Schwingungsdämpfer für ein schwingungsfähiges System**
Active vibration damper for a vibrating system
Amortisseur d'oscillations actif pour un système capable d'osciller

(43) Veröffentlichungstag der Anmeldung: 17.10.2012
(73) Patentinhaber: Siemens Aktiengesellschaft, 80333 München (DE)
(72) Erfinder: Ladra, Uwe, 91056, Erlangen (DE); Schäfers, Elmar, 90763, Fürth (DE); Steinigeweg, Rolf-Jürgen, 91074, Herzogenaurach (DE)

(56) Entgegenhaltungen:
- EP-A1- 1 783 366
- US-A- 5 209 326
- "INERTIA-WHEEL VIBRATION-DAMPING SYSTEM", NTIS TECH NOTES, US DEPARTMENT OF COMMERCE. SPRINGFIELD, VA, US, 1. Oktober 1990 (1990-10-01), Seiten 854,01-02, XP000171514, ISSN: 0889-8464

## Beschreibung

Die vorliegende Erfindung geht von einem aktiven Schwingungsdämpfer für ein schwingungsfähiges System aus,
- wobei der Schwingungsdämpfer einen Schwingungssensor, eine Steuereinrichtung, eine auf das schwingungsfähige System wirkende Ausgleichsmasse und einen Antrieb für die Ausgleichsmasse aufweist,
- wobei mittels des Schwingungssensors ein für eine Schwingung des schwingungsfähigen Systems relativ zu einem Bezugssystem repräsentatives Messsignal erfassbar ist,
- wobei das erfasste Messsignal der Steuereinrichtung zuführbar ist,
- wobei von der Steuereinrichtung anhand des erfassten Messsignals eine Kompensationsbewegung der Ausgleichsmasse relativ zum schwingungsfähigen System ermittelbar ist und der Antrieb derart ansteuerbar ist, dass die Ausgleichsmasse entsprechend der ermittelten Kompensationsbewegung bewegbar ist.

Schlecht gedämpfte Eigenfrequenzen können bei schwingungsfähigen Systemen dazu führen, dass das schwingungsfähige System instabil wird. Die auftretenden Resonanzen können Betriebsunterbrechungen erzwingen und im Extremfall zur Zerstörung des schwingungsfähigen Systems führen (so genannte Resonanzkatastrophe). Das bekannteste Beispiel einer derartigen Resonanzkatastrophe ist die Zerstörung der Tacoma-Narrows-Brücke im US-Bundesstaat Washington am 07. November 1940. Die Hängebrücke geriet durch zunehmenden Wind in selbst erregte Torsionsschwingungen und stürzte schließlich ein.

Ein Beispiel eines nahezu ungedämpften Schwingungssystems mit vielen Freiheitsgraden ist eine Windkraftanlage. Bei einer Windkraftanlage dominieren zum einen in Bezug auf den Turm der Windkraftanlage die erste bis dritte Turm-Biegefrequenz, in Bezug auf die Rotorblätter ebenfalls die erste bis dritte Eigenfrequenz, und zwar sowohl "flapwise" als auch "edgewise", sowie Torsionsschwingungen dieser Strukturen. Weiterhin können Überlagerungen der genannten Schwingungen auftreten.

Die Turmeigenfrequenz liegt bei Windkraftanlagen in der Regel zwischen 0,3 Hz und 0,8 Hz. Die Grundfrequenz hängt sowohl von der Höhe des Turms und dessen übriger Dimensionierung als auch von der Art des verwendeten Materials und dem Gewicht von Gondel und Rotor ab. Bei der Anregung durch den Wind spielt weiterhin die Stärke des Windes und dessen Böigkeit eine wichtige Rolle. Die Dämpfung der Turmeigenfrequenz liegt unter einem Prozent und ist damit im Falle einer resonanten Anregung vernachlässigbar.

Die Anregung der Turmschwingung kann auf verschiedene Weise erfolgen. Bei Windböen, die im Gleichtakt mit der Turmschwingung auftreten, wird die Schwingung immer weiter angefacht. Die dabei auftretenden Amplituden können weit mehr als einen Meter erreichen.

Bei Windkraftanlagen liegt weiterhin üblicherweise die Drehzahl bei 18 Umdrehungen pro Minute, was einer Frequenz von 0,3 Hz entspricht. Damit liegt die Drehfrequenz in der Nähe der Turmbiegefrequenz, so dass die Turmschwingung beispielsweise sogar in Folge von Unwuchten des Rotors (= Windrads) in Abhängigkeit von der Rotorblattstellung angeregt werden kann. Die Turmschwingung mit ihrer Eigenfrequenz beschränkt damit die maximal zulässige Rotordrehzahl. Könnte man die Turmschwingungen effektiv begrenzen, wäre eine höhere Drehzahl möglich, was eine - unter Umständen erheblich - größere Energiegewinnung zur Folge hätte.

Die Rotorblätter müssen im Stand der Technik bis zu einer Genauigkeit von unter einem Kilogramm ausgewuchtet sein. Bei Vereisung der Rotorblätter können jedoch schnell erheblich größere Massen - teilweise mehrere hundert Kilogramm - an Eis an den Rotorblättern hängen. Löst sich dieses Eis ungleichmä-ßig, so führt dies zu einer großen Unwucht und damit verbunden zu einer gefährlichen Turmschwingung. Auch andere Ursachen können entsprechende Turmschwingungen zur Folge haben.

Um die Turmschwingungen zu verhindern bzw. zumindest zu begrenzen, werden im Stand der Technik auf das jeweilige schwingungsfähige System abgestimmte, passive Schwingungstilger im Turm, in den Rotorblättern oder in der Gondel installiert. Die passiven Schwingungstilger sollen den Schwingungen im Resonanzbereich entgegenwirken und die großen Schwingungsamplituden begrenzen. Zur Dämpfung der ersten Turmeigenfrequenz (= Grundfrequenz) wird beispielsweise unter der Gondel oftmals ein passiver Tilger montiert, der ein erhebliches Gewicht aufweist. In der Praxis ist eine Masse zwischen einer Tonne und 15 Tonnen üblich.

Der wesentliche Nachteil passiver Tilger ist ihre begrenzte Bandbreite. Sie sind in der Regel auf genau eine Frequenz (bzw. einen Frequenzbereich) abgestimmt und können nur dort Schwingungen dämpfen. Sollen zwei verschiedene Turmeigenfrequenzen gedämpft werden, werden zwei Tilger benötigt, nämlich je einer für die beiden zu dämpfenden Frequenzen.

In manchen Fällen ist die Dämpfungswirkung des passiven Tilgers darüber hinaus unzureichend. In diesem Fall muss der Betrieb der Windkraftanlage aus Sicherheitsgründen eingestellt werden. Das Stillsetzen der Windkraftanlage, das insbesondere bei starkem Wind erforderlich ist, verringert jedoch die Produktivität der Windkraftanlage.

Bei freistehenden Gebäuden, die durch Wind zu Schwingungen angeregt werden können, kann die Schwingungsrichtung entsprechend der Windrichtung stark variieren. Es ist also nicht vorab bekannt, in welcher Richtung die Schwingung erfolgt. Bei Türmen (Fernsehtürmen, Windenergieanlagen und dergleichen), die mehrfach symmetrisch sind, kann die Schwingungsrichtung aufgrund des zylindrischen Querschnitts des Turms in allen Richtungen erfolgen. Bei hohen Gebäuden wie beispielsweise Hochhäusern ergeben sich aufgrund von meist rechteckigen oder in Einzelfällen auch mehreckigen Querschnitten verschiedene bevorzugte Schwingungsrichtungen. Auch hier ist jedoch nicht vorab bekannt, in welcher Richtung eine Schwingung tatsächlich auftritt.

Solche Probleme können auch bei anderen schwingungsfähigen Systemen auftreten, beispielsweise bei Containerbrücken, d. h. großen Krananlagen, mittels derer in Seehäfen der Containerumschlag von Schiff zu Land und umgekehrt erfolgt.

Aus der US 5 209 326 A ist ein aktiver Schwingungsdämpfer für ein schwingungsfähiges System bekannt. Der Schwingungsdämpfer weist eine Mehrzahl von Beschleunigungssensoren auf, die jeweils eine Beschleunigungskomponente des schwingungsfähigen Systems erfassen. Der Schwingungsdämpfer weist weiterhin eine Mehrzahl von Aktuatoren auf, die jeweils auf das schwingungsfähige System wirken. Eine Steuereinrichtung koordiniert die Ansteuerung der Aktuatoren in Abhängigkeit von den erfassten Beschleunigungssignalen. Mittels des aktiven Schwingungsdämpfers können Schwingungen des schwingungsfähigen Systems sowohl in den drei translatorischen als auch in den drei rotatorischen Freiheitsgraden gedämpft werden.

Aus der EP 1 783 366 A1 ist ein aktiver Schwingungsdämpfer für einen Turm einer Windkraftanlage bekannt. Der Schwingungsdämpfer weist eine Anzahl von Massekörpern auf, die sternförmig um die Hochachse des Turms herum angeordnet sind. Durch geeignete Überlagerung und Steuerung der einzelnen Beschleunigungs- und Abbremsbewegungen können auch komplexe Vibrationsbewegungen generiert oder gedämpft werden.

Aus dem Kurzaufsatz "Inertia-Wheel Vibration-Damping System" NTIS Tech Notes, US Department of Commerce, Springfield, VA, US, 1. Oktober 1990, Seite 854 ist bekannt, ein Beschleunigungssignal in mehreren Kanälen kanalabhängig zu verarbeiten und so ein jeweiliges Steuersignal für einen Schwingungsdämpfer zu ermitteln. Das stärkste ermittelte Steuersignal wird auf einen aktiven Schwingungsdämpfer aufgeschaltet.

Die Aufgabe der vorliegenden Erfindung besteht darin, Möglichkeiten zu schaffen, mittels derer eine effiziente und robuste aktive Schwingungsdämpfung eines schwingungsfähigen Systems auch dann erreicht werden kann, wenn die Richtung der auftretenden Schwingung nicht vorab bekannt ist, sondern sich erst aufgrund der Anregung einstellt.

Die Aufgabe wird durch einen aktiven Schwingungsdämpfer mit den Merkmalen des Anspruchs 1 gelöst. Vorteilhafte Ausgestaltungen des erfindungsgemäßen aktiven Schwingungsdämpfers sind Gegenstand der abhängigen Ansprüche 2 bis 6. Anspruch 7 nennt eine bevorzugte Verwendung.

Erfindungsgemäß ist vorgesehen, einen aktiven Schwingungsdämpfer für ein schwingungsfähiges System zu schaffen,
- bei dem der Schwingungsdämpfer eine Mehrzahl von Schwingungssensoren aufweist, mittels derer jeweils ein zeitabhängiges Messsignal erfassbar ist, das für eine jeweilige Erfassungsrichtung eine in der jeweiligen Erfassungsrichtung verlaufende Komponente einer Schwingung des schwingungsfähigen Systems relativ zu einem Bezugssystem repräsentiert,
- bei dem die Erfassungsrichtungen ein mehrdimensionales Richtungskontinuum aufspannen,
- bei dem der Schwingungsdämpfer eine auf das schwingungsfähige System wirkende Ausgleichsmasse aufweist,
- bei dem der Schwingungsdämpfer einen ersten Antrieb und eine Anzahl von zweiten Antrieben aufweist,
- bei dem die Ausgleichsmasse mittels des ersten Antriebs in einer innerhalb des Richtungskontinuums liegenden Verfahrrichtung verfahrbar ist,
- bei dem mittels der zweiten Antriebe eine Orientierung der Verfahrrichtung innerhalb des Richtungskontinuums einstellbar ist,
- bei dem der Schwingungsdämpfer eine Steuereinrichtung aufweist, der die erfassten Messsignale zuführbar sind und von der anhand der erfassten Messsignale die Oszillationsrichtung der Schwingung innerhalb des Richtungskontinuums und die Amplitude der auftretenden Schwingung ermittelbar sind,
- bei dem Steuersignale für die zweiten Antriebe von der Steuereinrichtung derart ermittelbar sind, dass die Verfahrrichtung mit der Oszillationsrichtung der Schwingung übereinstimmt,
   - - bei dem Steuersignale für den ersten Antrieb von der Steuereinrichtung derart ermittelbar sind, dass die Amplitude der Schwingung gedämpft wird, bei dem die Steuersignale von der Steuereinrichtung zumindest in dem Fall, dass die durch die Schwingung des schwingungsfähigen Systems in den Schwingungssensoren hervorgerufenen Messsignale gleichphasig sind, derart ermittelbar sind, dass die Schwingung des schwingungsfähigen Systems gedämpft wird, ohne eine andere Schwingung des schwingungsfähigen Systems anzuregen, und
- bei dem die von der Steuereinrichtung ermittelten Steuersignale an den ersten Antrieb und die zweiten Antriebe ausgebbar sind.

In vielen Fällen ist es ausreichend, wenn die Anzahl an Schwingungssensoren zwei ist. Insbesondere in diesem Fall können die Erfassungsrichtungen horizontal verlaufen.

Unabhängig von der Anzahl an Schwingungssensoren verlaufen die Erfassungsrichtungen vorzugsweise orthogonal zueinander.

Unter Umständen können auch andere als rein lineare Schwingungen gedämpft werden. Insbesondere kann, falls die Zeitdauer, in der sich eine Schwingung aufschaukelt, hinreichend groß ist, nacheinander zuerst eine in einer ersten Schwingungsrichtung verlaufende Schwingung gedämpft werden und sodann eine in einer anderen Schwingungsrichtung verlaufende Schwingung. Dies setzt jedoch voraus, dass das Einstellen der Verfahrrichtung hinreichend schnell erfolgen kann.

Das schwingungsfähige System weist eine Ruhelage auf. Weiterhin weist das schwingungsfähige System einen Massenschwerpunkt auf. Der Verfahrweg ist vorzugsweise mittels der zweiten Antriebe um eine vertikale Achse drehbar, so dass der Verfahrweg unabhängig von seiner Orientierung stets die vertikale Achse schneidet.

Im einfachsten Fall muss nur eine einzelne, vorbekannte Schwingungsfrequenz gedämpft werden. In manchen Fällen kann es jedoch erforderlich sein, mehrere Schwingungsfrequenzen simultan zu dämpfen. In diesem Fall ist bevorzugt,
- dass die Steuereinrichtung für den ersten Antrieb in mehreren Auswertungspfaden anhand der erfassten Messsignale ein jeweiliges Teilsteuersignal ermittelt,
- dass die Steuereinrichtung für den ersten Antrieb die Teilsteuersignale zum Steuersignal für den ersten Antrieb summiert und
- dass die Steuereinrichtung die Teilsteuersignale in den Auswertungspfaden anhand einer auswertungspfadspezifischen Ermittlungsvorschrift ermittelt.

Der erfindungsgemäße Schwingungsdämpfer kann prinzipiell bei beliebigen schwingungsfähigen Systemen verwendet werden. Vorzugsweise wird er bei einem hohen Bauwerk (einem Turm, einem Hochhaus und dergleichen mehr) zur Dämpfung von Querschwingungen des hohen Bauwerks verwendet.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch eine Windkraftanlage von der Seite,
- FIG 2: schematisch die Windkraftanlage von FIG 1 von oben,
- FIG 3: schematisch ein Hochhaus von der Seite,
- FIG 4: schematisch das Hochhaus von FIG 3 von oben,
- FIG 5: schematisch den steuerungstechnischen Aufbau eines aktiven Schwingungsdämpfers,
- FIG 6: schematisch einen Schwingungsdämpfer mit einer Ausgleichsmasse von der Seite,
- FIG 7: schematisch den Schwingungsdämpfer von FIG 6 von oben,
- FIG 8: ein Ablaufdiagramm,
- FIG 9: schematisch den Aufbau eines Auswertungspfades,
- FIG 10: schematisch eine Modifikation des Auswertungspfades von FIG 10 und
- FIG 11: schematisch mehrere zusammenwirkende Auswertungspfade.

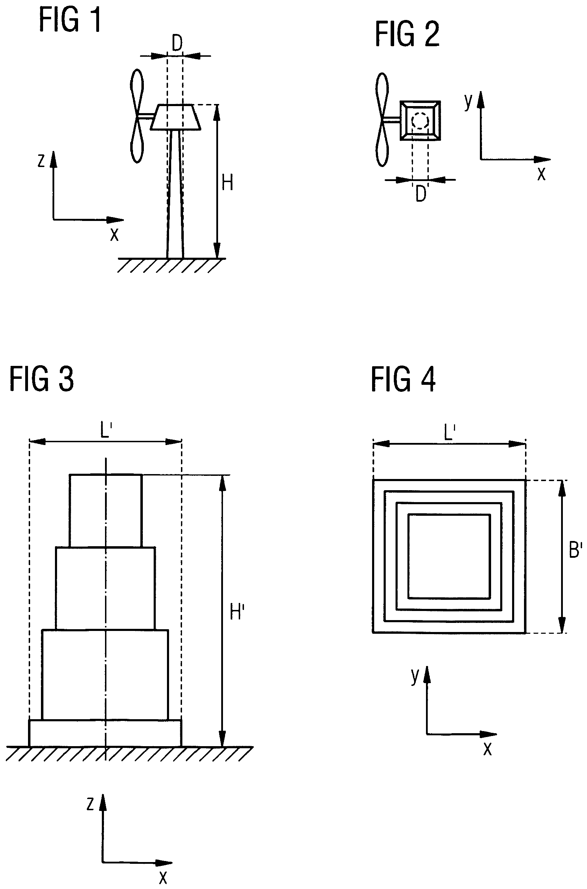

Die FIG 1 und 2 zeigen ein erstes Beispiel eines schwingungsfähigen Systems, das in mehreren Schwingungsrichtungen schwingen kann. Gemäß den FIG 1 und 2 ist das schwingungsfähige System als hohes Bauwerk ausgebildet, nämlich als Turm einer Windkraftanlage. Das hohe Bauwerk erstreckt sich in Vertikalrichtung (z-Richtung) über eine Höhe H. Es erstreckt sich am Turmfuß, d.h. in der Nähe des Bodens, in einer ersten Horizontalrichtung (x-Richtung) und aufgrund des in der Regel kreisförmigen Querschnitts des Turms auch in einer zweiten Horizontalrichtung (y-Richtung) über einen Durchmesser D. Die beiden Horizontalrichtungen x und y sowie die Vertikalrichtung z definieren ein rechtshändiges, rechtwinkliges kartesisches Koordinatensystem.

Die FIG 3 und 4 zeigen ein zweites Beispiel eines schwingungsfähigen Systems, das in mehreren Schwingungsrichtungen schwingen kann. Gemäß den FIG 3 und 4 ist das schwingungsfähige System ebenfalls als hohes Bauwerk ausgebildet, nämlich als Hochhaus. Das Hochhaus erstreckt sich in Vertikalrichtung über eine Höhe H'. In den Horizontalrichtungen weist das Hochhaus eine Länge L' und eine Breite B' auf.

Die in den FIG 1 bis 4 dargestellten schwingungsfähigen Systeme und auch andere hohe Bauwerke - d.h. Bauwerke, deren vertikale Höhe H, H' mindestens das fünffache, meist sogar mindestens das zehnfache oder mindestens das zwanzigfache, ihrer maximalen Horizontalerstreckung beträgt - sind schwingungsfähige Systeme, bei denen ein nachfolgend näher erläuterter aktiver Schwingungsdämpfer bevorzugt verwendet wird. Prinzipiell ist der erfindungsgemäße aktive Schwingungsdämpfer jedoch bei beliebigen schwingungsfähigen Systemen einsetzbar, die in mehreren Schwingungsrichtungen schwingen können.

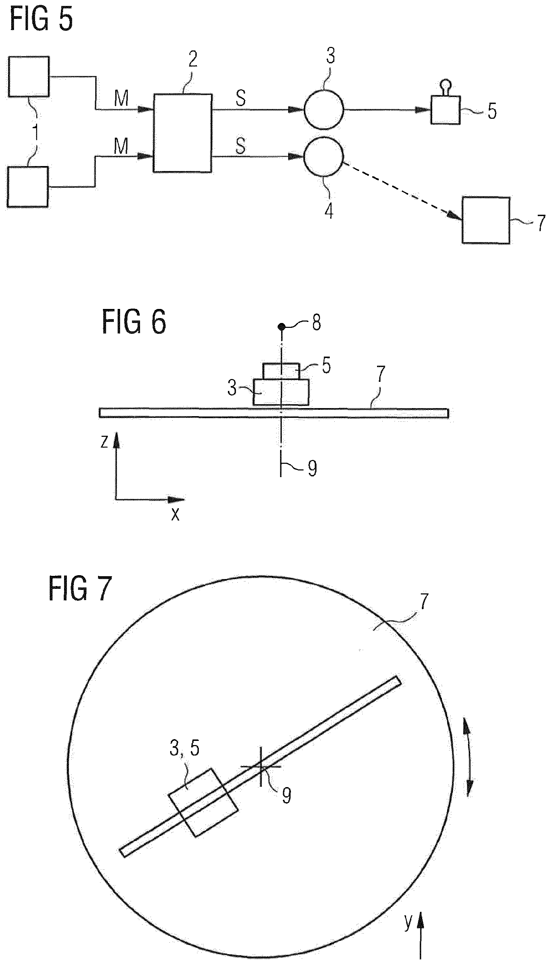

Gemäß FIG 5 weist der aktive Schwingungsdämpfer eine Mehrzahl von Schwingungssensoren 1 auf. Mittels jedes Schwingungssensors 1 ist jeweils ein zeitabhängiges Messsignal M erfassbar. Das jeweilige zeitabhängige Messsignal M repräsentiert für eine jeweilige Erfassungsrichtung eine in der jeweiligen Erfassungsrichtung verlaufende Komponente einer Schwingung des schwingungsfähigen Systems relativ zu einem Bezugsystem, beispielsweise dem durch die Koordinaten x, y und z definierten Koordinatensystem. Beispielsweise kann mittels jeweils eines Schwingungssensors 1 die in x-Richtung und die in y-Richtung verlaufende Komponente der Schwingung des schwingungsfähigen Systems erfasst werden.

Falls die Schwingungssensoren 1 diese Messsignale M erfassen, sind folgende vorteilhafte Ausgestaltungen der vorliegenden Erfindung realisiert:
- Die Anzahl an Schwingungssensoren 1 ist zwei.
- Die Erfassungsrichtungen verlaufen horizontal.
- Die Erfassungsrichtungen verlaufen orthogonal zueinander.

Diese Ausgestaltungen sind jedoch, wie bereits erwähnt, nur vorteilhaft. Zwingend erforderlich sind sie nicht. Beispielsweise könnte die Anzahl an Schwingungssensoren 1 größer als zwei sein. Insbesondere könnten drei bis sechs Schwingungssensoren 1 vorhanden sein. Auch müssen die Erfassungsrichtungen nicht zwangsweise horizontal verlaufen. In Einzelfällen kann (mindestens) eine der Erfassungsrichtungen eine Vertikalkomponente aufweisen. Insbesondere kann in Einzelfällen sinnvoll sein, in einer Horizontalrichtung eine Horizontalschwingung und in der Vertikalrichtung eine Vertikalschwingung zu erfassen. Auch ist es nicht zwingend erforderlich, dass die Erfassungsrichtungen orthogonal zueinander verlaufen. Entscheidend ist nur, dass die Erfassungsrichtungen linear unabhängig voneinander sind.

Unabhängig davon, ob die oben genannten vorteilhaften Ausgestaltungen realisiert sind oder nicht, spannen die Erfassungsrichtungen ein mehrdimensionales - im Falle von zwei Schwingungssensoren 1 ein zweidimensionales, im Fall von drei Schwingungssensoren 1 ein dreidimensionales - Richtungskontinuum auf. Durch eine Linearkombination von entsprechend skalierten Vektoren, von denen jeder in eine der Erfassungsrichtungen zeigt, ist somit jede beliebige Richtung des Richtungskontinuums darstellbar.

Die Schwingungssensoren 1 können nach Bedarf ausgebildet sein. Im einfachsten Fall handelt es sich um Beschleunigungssensoren. In diesem Fall sind die Messsignale M Beschleunigungssignale.

Es ist möglich, dass die Schwingungssensoren 1 zu einer gemeinsamen Sensoreinheit zusammengefasst sind. Insbesondere ist es üblich, eine Sensoreinheit zu verwenden, die drei zueinander orthogonale Beschleunigungssignale liefert, wobei eines der Beschleunigungssignale vorzugsweise der Vertikalrichtung entspricht. Falls eine derartige Sensoreinheit verwendet wird, kann diese alternativ zwei oder drei Schwingungssensoren 1 im Sinne der vorliegenden Erfindung umfassen. Entscheidend ist, welche Messsignale M in einer Steuereinrichtung 2 des Schwingungsdämpfers ausgewertet werden. Wenn also beispielsweise eine einzige Sensoreinheit die Beschleunigungen in x-Richtung, in y-Richtung und z-Richtung liefert, aber nur die Beschleunigungen in x-Richtung und y-Richtung ausgewertet werden, sind im Sinne der vorliegenden Erfindung nur zwei Schwingungssensoren 1 vorhanden. Denn das dritte gelieferte Signal wird nicht ausgewertet, so dass es unbeachtlich ist.

Die Schwingungssensoren 1 führen ihre Messsignale M der Steuereinrichtung 2 zu. Die Steuereinrichtung 2 nimmt von den Schwingungssensoren 1 deren Messsignale M entgegen. Die Steuereinrichtung 2 ermittelt anhand der erfassten Messsignale M Steuersignale S für einen ersten Antrieb 3 des Schwingungsdämpfers und eine Anzahl zweiter Antriebe 4 des Schwingungsdämpfers. Die Steuereinrichtung 2 gibt die Steuersignale S an den ersten Antrieb 3 und die zweiten Antriebe 4 aus.

Die Anzahl an zweiten Antrieben 4 ist in der Regel eins niedriger als die Anzahl an Schwingungssensoren 1. Minimal - nämlich in dem (üblichen) Fall, dass zwei Schwingungssensoren 1 vorhanden sind - ist somit nur ein einziger zweiter Antrieb 4 vorhanden. Alternativ können jedoch auch mehrere zweite Antriebe 4 vorhanden sein.

Mittels des ersten Antriebs 3 ist - siehe auch FIG 6 - eine Ausgleichsmasse 5 des Schwingungsdämpfers in einer Verfahrrichtung verfahrbar. Die Verfahrrichtung liegt innerhalb des Richtungskontinuums, kann innerhalb des Richtungskontinuums jedoch beliebig orientiert sein.

Die Ausgleichsmasse 5 wirkt auf das schwingungsfähige System. Die Steuereinrichtung 2 ermittelt die Steuersignale S für den ersten Antrieb 3 derart, dass eine in der Verfahrrichtung verlaufende Schwingung des schwingungsfähigen Systems - insbesondere eine Querschwingung eines hohen Bauwerks - gedämpft wird.

Mittels der zweiten Antriebe 4 kann entsprechend der Darstellung in den FIG 6 und 7 eine Orientierung der Verfahrrichtung innerhalb des Richtungskontinuums einstellbar sein. Insbesondere können der erste Antrieb 3 und die Ausgleichsmasse 5 auf einer Tragstruktur 7 angeordnet sein, so dass - bezogen auf die Tragstruktur 7 - die Verfahrrichtung feststeht. Die Orientierung der Tragstruktur 7 wird in diesem Fall mittels der zweiten Antriebe 4 eingestellt.

Wenn die Schwingung des schwingungsfähigen Systems in den Schwingungssensoren 1 gleichphasige Messsignale M hervorruft, ist bei der Ausgestaltung gemäß den FIG 6 und 7 die Ermittlung der Steuersignale S für den ersten Antrieb 3 und die zweiten Antriebe 4 sehr einfach: Zunächst ermittelt die Steuereinrichtung 2 anhand der Messsignale M die Schwingungsrichtung und steuert die zweiten Antriebe 4 derart an, dass die Verfahrrichtung mit der Schwingungsrichtung übereinstimmt. Sodann ermittelt die Steuereinrichtung 2 die Steuersignale S für den ersten Antrieb 3 derart, dass die Schwingung des schwingungsfähigen Systems gedämpft wird. Aufgrund des Umstands, dass die Verfahrrichtung mit der Schwingungsrichtung übereinstimmt, wird beim Dämpfen der Schwingung des schwingungsfähigen Systems keine andere Schwingung des schwingungsfähigen Systems angeregt.

Das schwingungsfähige System weist - wie jedes mechanisch schwingungsfähige System - eine Ruhelage auf. Das schwingungsfähige System weist weiterhin einen Massenschwerpunkt 8 auf. Die FIG 6 und 7 zeigen eine vertikale Achse 9. Die vertikale Achse 9 enthält bei dem in der Ruhelage befindlichen schwingungsfähigen System den Massenschwerpunkt 8.

Gemäß den FIG 6 und 7 ist die Ausgleichsmasse 5 entlang eines Verfahrweges verfahrbar, wobei der Verfahrweg mittels des zweiten Antriebs 4 um genau die vertikale Achse 9 drehbar ist, so dass die Verfahrrichtung unabhängig von ihrer Orientierung stets die vertikale Achse 9 enthält.

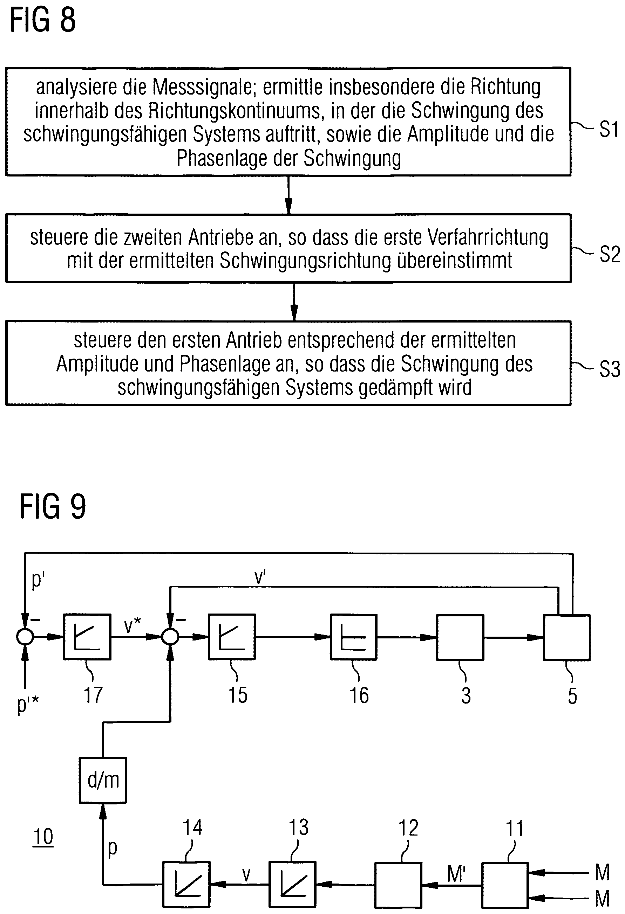

Die Steuereinrichtung 2 kann gemäß FIG 8 beispielsweise wie folgt arbeiten:
Zunächst analysiert die Steuereinrichtung 2 in einem Schritt S1 die Messsignale M. Insbesondere ermittelt die Steuereinrichtung 2 im Schritt S1 die Richtung innerhalb des Richtungskontinuums, in der die Schwingung (bzw. im Falle mehrerer überlagerter Schwingungen die dominante Schwingung) des schwingungsfähigen Systems auftritt. Weiterhin ermittelt die Steuereinrichtung 2 die Amplitude und die Phasenlage der Schwingung des schwingungsfähigen Systems.

In einem Schritt S2 steuert die Steuereinrichtung 2 die zweiten Antriebe 4 an, so dass die Verfahrrichtung mit der ermittelten Schwingungsrichtung übereinstimmt. In einem Schritt S3 steuert die Steuereinrichtung 2 den ersten Antrieb 3 entsprechend der im Schritt S1 ermittelten Amplitude und Phasenlage an, so dass die Schwingung des schwingungsfähigen Systems gedämpft wird.

Die Steuereinrichtung 2 ermittelt das Steuersignal S für den ersten Antrieb 3 in einem Auswertungspfad 10. Der Auswertungspfad 10 kann gemäß FIG 9 beispielsweise wie folgt aufgebaut sein:
Zunächst wird in einem Signalermittler 11 anhand der erfassten Messsignale M ein resultierendes Messsignal M' ermittelt. Sodann wird das resultierende Messsignal M' in einem Filter 12 gefiltert. Das Filter 12 ist auf einen Frequenzbereich abgestimmt, der die Frequenz der zu dämpfenden Schwingung umfasst.

Im Falle eines Beschleunigungssignals wird beispielsweise mittels eines ersten Integrators 13 anhand des resultierenden Messsignals M' zunächst ein Geschwindigkeitssignal v der Schwingung des schwingungsfähigen Systems ermittelt. Sodann wird anhand eines zweiten Integrators 14 anhand des Geschwindigkeitssignals v des schwingungsfähigen Systems dessen Lagesignal p ermittelt.

Das Lagesignal p wird - unabhängig von der Art seiner Herleitung - mit einem Gewichtungsfaktor d/m skaliert und einem Geschwindigkeitsregler 15 als Geschwindigkeitssteuersignal zugeführt. In dem Gewichtungsfaktor d/m entspricht der Zähler d der gewünschten Dämpfung, der Nenner m der Masse der ersten Ausgleichsmasse 5.

Dem Geschwindigkeitsregler 15 wird als weiteres Eingangssignal eine Istgeschwindigkeit v' der ersten Ausgleichsmasse 5 relativ zum schwingungsfähigen System zugeführt.

Der Geschwindigkeitsregler 15 kann nach Bedarf ausgebildet sein, insbesondere als PI-Regler. Er ermittelt das Steuersignal S, das - beispielsweise über einen üblichen Stromregler 16 - dem ersten Antrieb 3 zugeführt wird.

Entsprechend der Darstellung von FIG 9 kann die Steuereinrichtung 2 einen Lageregler 17 aufweisen, der dem Geschwindigkeitsregler 15 vorgeordnet ist. In diesem Fall wird das Geschwindigkeitssteuersignal entsprechend der Darstellung von FIG 9 auf das Ausgangssignal v* des Lagereglers 17 aufgestaltet. Dem Lageregler 17 wird als Istwert eine Istlage p' der ersten Ausgleichsmasse 5 relativ zum schwingungsfähigen System zugeführt. Als Sollwert p'* wird dem Lageregler 17 ein konstanter Wert zugeführt, beispielsweise der Wert 0. Der Lageregler 17 kann nach Bedarf ausgebildet sein. Insbesondere kann er als PI-Regler mit schwachem Integralanteil ausgebildet sein.

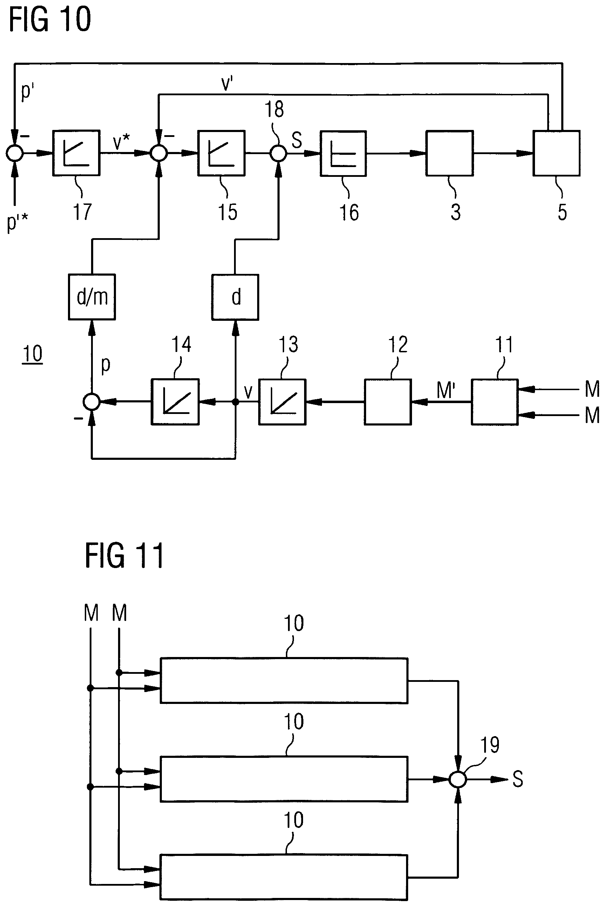

Bei der Ausgestaltung des Auswertungspfades 10 gemäß FIG 9 verwertet die Steuereinrichtung 2 ausschließlich das Lagesignal p des schwingungsfähigen Systems. Das Geschwindigkeitssignal v wird zwar ermittelt, jedoch im Rahmen der Vorgehensweise von FIG 9 nicht verwertet. Alternativ ist es möglich, dass die Steuereinrichtung 2 das Steuersignal S für den ersten Antrieb 3 unter Verwertung auch des Geschwindigkeitssignals v ermittelt. Dies wird nachfolgend in Verbindung mit FIG 10 näher erläutert.

Die Ausgestaltung des Auswertungspfades 10 von FIG 10 ist eine Weiterentwicklung des Auswertungspfades 10 von FIG 9. Die in Verbindung mit FIG 9 getroffenen Aussagen bleiben daher weiterhin gültig.

Zusätzlich wird bei dem Aufbereitungspfad 10 gemäß FIG 10 auf das mit dem Faktor d/m skalierte Lagesignal p die ermittelte Istgeschwindigkeit v mit negativem Vorzeichen aufgeschaltet. Weiterhin wird das mit dem Faktor d - d.h. der gewünschten Dämpfung d - skalierte Geschwindigkeitssignal v auf den Ausgang 18 des Geschwindigkeitsreglers 15 aufgeschaltet.

Der erste Antrieb 3 kann nach Bedarf ausgebildet sein. Beispielsweise kann der erste Antrieb 3 als Linearmotor ausgebildet sein. Diese Ausgestaltung ist besonders vorteilhaft.

Es ist möglich, dass mittels des Auswertungspfades 10 der FIG 9 und 10 eine Überlagerung mehrerer Schwingungen, die alle in derselben Schwingungsrichtung, gedämpft werden soll. In diesem Fall weist die Steuereinrichtung 2 gemäß FIG 11 mehrere derartige Auswertungspfade 10 auf. In jedem Auswertungspfad 10 ermittelt die Steuereinrichtung 2 anhand des resultierenden Messsignals M' ein jeweiliges Teilsteuersignal. Die Teilsteuersignale werden von der Steuereinrichtung 2 in einem Summationsknoten 19 zum Steuersignal S für den ersten Antrieb 3 summiert.

Die Steuereinrichtung 2 ermittelt die Teilsteuersignale in den Auswertungspfaden 10 anhand einer auswertungspfadspezifischen Ermittlungsvorschrift. Insbesondere ist jeder Auswertungspfad 10 auf eine jeweilige Frequenz abgestimmt. Die Abstimmung betrifft mindestens eine der nachfolgenden Größen:
- Die Durchlasskurve des Filters 12,
- die Dämpfung d,
- die Proportionalverstärkung des Lagereglers 17 und
- die Nachstellzeit des Lagereglers 17.

Die vorliegende Erfindung weist viele Vorteile auf. Insbesondere ist mittels des erfindungsgemäßen aktiven Schwingungsdämpfers eine effiziente Dämpfung des schwingungsfähigen Systems in mehreren Schwingungsrichtungen möglich. Dies gilt sogar dann, wenn die Schwingungsrichtungen nicht vorab bekannt sind.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Aktiver Schwingungsdämpfer für ein schwingungsfähiges System,
- wobei der Schwingungsdämpfer eine Mehrzahl von Schwingungssensoren (1) aufweist, mittels derer jeweils ein zeitabhängiges Messsignal (M) erfassbar ist, das für eine jeweilige Erfassungsrichtung eine in der jeweiligen Erfassungsrichtung verlaufende Komponente einer Schwingung des schwingungsfähigen Systems relativ zu einem Bezugssystem repräsentiert,
- wobei die Erfassungsrichtungen ein mehrdimensionales Richtungskontinuum aufspannen,
- wobei der Schwingungsdämpfer eine auf das schwingungsfähige System wirkende Ausgleichsmasse (5) aufweist,
- wobei der Schwingungsdämpfer einen ersten Antrieb (3) und eine Anzahl von zweiten Antrieben (4) aufweist,
- wobei die Ausgleichsmasse (5) mittels des ersten Antriebs (3) in einer innerhalb des Richtungskontinuums liegenden Verfahrrichtung verfahrbar ist,
- wobei mittels der zweiten Antriebe (4) eine Orientierung der Verfahrrichtung innerhalb des Richtungskontinuums einstellbar ist,
- wobei der Schwingungsdämpfer eine Steuereinrichtung (2) aufweist, der die erfassten Messsignale (M) zuführbar sind und von der anhand der erfassten Messsignale (M) die Oszillationsrichtung der Schwingung innerhalb des Richtungskontinuums und die Amplitude der Schwingung ermittelbar sind,
- wobei Steuersignale (S) für die zweiten Antriebe (4) von der Steuereinrichtung (2) derart ermittelbar sind, dass die Verfahrrichtung mit der Oszillationsrichtung der Schwingung übereinstimmt,
- wobei Steuersignale (S) für den ersten Antrieb (3) von der Steuereinrichtung (2) derart ermittelbar sind, dass die Amplitude der Schwingung gedämpft wird,
- wobei die Steuersignale (S) von der Steuereinrichtung (2) zumindest in dem Fall, dass die durch die Schwingung des schwingungsfähigen Systems in den Schwingungssensoren (1) hervorgerufenen Messsignale (M) gleichphasig sind, derart ermittelbar sind, dass die Schwingung des schwingungsfähigen Systems gedämpft wird, ohne eine andere Schwingung des schwingungsfähigen Systems anzuregen, und
- wobei die von der Steuereinrichtung (2) ermittelten Steuersignale (S) an den ersten Antrieb (3) und die zweiten Antriebe (4) ausgebbar sind.
- wobei Steuersignale (S) für den ersten Antrieb (3) von der Steuereinrichtung (2) derart ermittelbar sind, dass die Amplitude der Schwingung gedämpft wird, und
- wobei der erste Antrieb (3) und die zweiten Antriebe (4) von der Steuereinrichtung (2) entsprechend den ermittelten Steuersignalen (S) angesteuert werden.

2. Schwingungsdämpfer nach Anspruch 1, **dadurch gekennzeichnet, dass** die Anzahl an Schwingungssensoren (1) zwei ist.

3. Schwingungsdämpfer nach Anspruch 2, **dadurch gekennzeichnet, dass** die Erfassungsrichtungen horizontal verlaufen.

4. Schwingungsdämpfer nach Anspruch 1, 2 oder 3, **dadurch gekennzeichnet, dass** die Erfassungsrichtungen orthogonal zueinander verlaufen.

5. Schwingungsdämpfer nach einem der Ansprüche 1 bis 4, **dadurch gekennzeichnet, dass** das schwingungsfähige System eine Ruhelage aufweist, dass das schwingungsfähige System einen Massenschwerpunkt (8) aufweist, dass die Ausgleichsmasse (5) entlang eines Verfahrweges verfahrbar ist und dass der Verfahrweg mittels der zweiten Antriebe (4) um eine vertikale Achse (9) drehbar ist, die bei dem in der Ruhelage befindlichen schwingungsfähigen System den Massenschwerpunkt (8) enthält.

6. Schwingungsdämpfer nach einem der obigen Ansprüche, **dadurch gekennzeichnet,**
- **dass** die Steuereinrichtung (2) für den ersten Antrieb (3) in mehreren Auswertungspfaden (10) anhand der erfassten Messsignale (M) ein jeweiliges Teilsteuersignal ermittelt,
- **dass** die Steuereinrichtung (2) für den ersten Antrieb (3) die Teilsteuersignale zum Steuersignal (S) für den ersten Antrieb (3) summiert und
- **dass** die Steuereinrichtung (2) die Teilsteuersignale in den Auswertungspfaden (10) anhand einer auswertungspfadspezifischen Ermittlungsvorschrift ermittelt.

7. Schwingungsdämpfer nach einem der obigen Ansprüche, **dadurch gekennzeichnet, dass** er bei einem hohen Bauwerk zur Dämpfung von Querschwingungen des hohen Bauwerks verwendet wird.

## Claims

1. Active vibration damper for a vibrating system,
- wherein the vibration damper has a plurality of vibration sensors (1), by means of which it is possible in each case to detect a time-dependent measuring signal (M), which, for a respective direction of detection, represents a component of a vibration of the vibrating system running in the respective direction of detection in relation to a reference system,
- wherein the directions of detection define a multidimensional directional continuum,
- wherein the vibration damper has a balancing mass (5) acting on the vibrating system,
- wherein the vibration damper has a first drive (3) and a number of second drives (4),
- wherein the balancing mass (5) can be moved by means of the first drive (3) in a direction of movement lying within the directional continuum,
- wherein an orientation of the direction of movement within the directional continuum can be set by means of the second drives (4),
- wherein the vibration damper has a control device (2), to which the detected measuring signals (M) can be fed and by which the direction of oscillation of the vibration within the directional continuum and the amplitude of the vibration can be determined on the basis of the detected measuring signals (M),
- wherein control signals (S) for the second drives (4) can be determined by the control device (2) in such a way that the direction of movement coincides with the direction of oscillation of the vibration,
- wherein control signals (S) for the first drive (3) can be determined by the control device (2) in such a way that the amplitude of the vibration is damped,
- wherein, at least in the case where the measuring signals (M) induced in the vibration sensors (1) by the vibration of the vibrating system are of the same phase, the control signals (S) can be determined by the control device (2) in such a way that the vibration of the vibrating system is damped without exciting another vibration of the vibrating system, and
- wherein the control signals (S) determined by the control device (2) can be output to the first drive (3) and the second drives (4),
- wherein control signals (S) for the first drive (3) can be determined by the control device (2) in such a way that the amplitude of the vibration is damped, and
- wherein the first drive (3) and the second drives (4) are activated by the control device (2) in a way corresponding to the determined control signals (S).

2. Vibration damper according to Claim 1, **characterized in that** the number of vibration sensors (1) is two.

3. Vibration damper according to Claim 2, **characterized in that** the directions of detection run horizontally.

4. Vibration damper according to Claim 1, 2 or 3, **characterized in that** the directions of detection run orthogonally in relation to one another.

5. Vibration damper according to one of Claims 1 to 4, **characterized in that** the vibrating system has a position of rest, **in that** the vibrating system has a centre of mass (8), **in that** the balancing mass (5) is movable along a path of movement and **in that** the path of movement can be rotated by means of the second drives (4) about a vertical axis (9) which contains the centre of mass (8) when the vibrating system is in the position of rest.

6. Vibration damper according to one of the above claims, **characterized**
- **in that**, for the first drive (3), the control device (2) determines a respective partial control signal in a number of evaluation paths (10) on the basis of the detected measuring signals (M),
- **in that**, for the first drive (3), the control device (2) summates the partial control signals to form the control signal (S) for the first drive (3) and
- **in that** the control device (2) determines the partial control signals in the evaluation paths (10) on the basis of an evaluation-path-specific determination specification.

7. Vibration damper according to one of the above claims, **characterized in that** it is used in a high structure for damping transverse vibrations of the high structure.

## Revendications

1. Amortisseur de vibrations actif pour un système capable de vibrer,
- dans lequel l'amortisseur de vibrations présente une pluralité de capteurs de vibrations (1), au moyen desquels respectivement un signal de mesure dépendant du temps (M) peut être acquis, qui représente pour une direction d'acquisition respective une composante d'une vibration du système capable de vibrer par rapport à un système de référence, laquelle composante s'étend dans la direction d'acquisition respective,
- dans lequel les directions d'acquisition définissent un continuum de directions multidimensionnel,
- dans lequel l'amortisseur de vibrations présente une masse de compensation (5) qui agit sur le système capable de vibrer,
- dans lequel l'amortisseur de vibrations présente un premier mécanisme d'entraînement (3) et une pluralité de deuxièmes mécanismes d'entraînement (4),
- dans lequel la masse de compensation (5) peut être déplacée au moyen du premier mécanisme d'entraînement (3) dans une direction de déplacement qui se trouve au sein du continuum de directions,
- dans lequel au moyen des deuxièmes mécanismes d'entraînement (4) une orientation de la direction de déplacement au sein du continuum de directions peut être ajustée,
- dans lequel l'amortisseur de vibrations présente un dispositif de commande (2) auquel peuvent être amenés les signaux de mesure (M) acquis et par lequel à l'aide des signaux de mesure (M) acquis la direction d'oscillation de la vibration au sein du continuum de directions et l'amplitude de la vibration peuvent être déterminées,
- dans lequel des signaux de commande (S) pour les deuxièmes mécanismes d'entraînement (4) peuvent être déterminés par le dispositif de commande (2) de telle sorte que la direction de déplacement coïncide avec la direction d'oscillation de la vibration,
- dans lequel des signaux de commande (S) pour le premier mécanisme d'entraînement (3) peuvent être déterminés par le dispositif de commande (2) de telle sorte que l'amplitude de la vibration est amortie,
- dans lequel les signaux de commande (S) peuvent être déterminés par le dispositif de commande (2) au moins dans le cas où les signaux de mesure (M) engendrés par le biais de la vibration du système capable de vibrer dans les capteurs de vibrations (1) sont en phase de telle sorte que la vibration du système capable de vibrer est amortie sans impulser une autre vibration du système capable de vibrer, et
- dans lequel les signaux de commande (S) déterminés par le dispositif de commande (2) peuvent être émis vers le premier mécanisme d'entraînement (3) et les deuxièmes mécanismes d'entraînement (4),
- dans lequel les signaux de commande (S) pour le premier mécanisme d'entraînement (3) peuvent être déterminés par le dispositif de commande (2) de telle sorte que l'amplitude de la vibration est amortie, et
- dans lequel le premier mécanisme de commande (3) et les deuxièmes mécanismes d'entraînement (4) sont commandés par le dispositif de commande (2) en fonction des signaux de commande (S) déterminés.

2. Amortisseur de vibrations selon la revendication 1, **caractérisé en ce que** le nombre de capteurs de vibrations (1) est de deux.

3. Amortisseur de vibrations selon la revendication 2, **caractérisé en ce que** les dispositifs d'acquisition s'étendent horizontalement.

4. Amortisseur de vibrations selon la revendication 1, 2 ou 3, **caractérisé en ce que** les dispositifs d'acquisition s'étendent de manière orthogonale les uns par rapport aux autres.

5. Amortisseur de vibrations selon l'une des revendications 1 à 4, **caractérisé en ce que** le système capable de vibrer présente une position de repos, **en ce que** le système capable de vibrer présente un centre de gravité (8), **en ce que** la masse de compensation (5) peut être déplacée le long d'une trajectoire de déplacement et **en ce que** la trajectoire de déplacement peut être tournée au moyen des deuxièmes mécanismes d'entraînement (4) autour d'un axe vertical (9) qui contient le centre de gravité (8) lorsque le système capable de vibrer se trouve en position de repos.

6. Amortisseur de vibrations selon l'une des revendications ci-dessus, **caractérisé en ce que**
- le dispositif de commande (2) pour le premier mécanisme d'entraînement (3) détermine dans plusieurs chemins d'évaluation (10) à l'aide des signaux de mesure (M) acquis un signal de commande partiel respectif,
- le dispositif de commande (2) pour le premier mécanisme d'entraînement (3) additionne les signaux de commande partiels pour obtenir le signal de commande (S) pour le premier mécanisme d'entraînement (3) et
- le dispositif de commande (2) détermine les signaux de commande partiels dans les chemins d'évaluation (10) à l'aide d'une consigne de détermination spécifique au chemin d'évaluation.

7. Amortisseur de vibrations selon l'une des revendications ci-dessus, **caractérisé en ce qu'**il est utilisé dans le cas d'un bâtiment haut en vue de l'amortissement de vibrations transversales du bâtiment haut.
